# EUROPEAN PATENT SPECIFICATION

(11) **EP 2 197 218 B1**
(45) Date of publication and mention of the grant of the patent: **17.10.2012**
(21) Application number: 07845686.0
(22) Date of filing: 23.11.2007
(51) Int. Cl.: H04Q 3/52, H04J 3/16, H04L 12/56

(54) **A SHARED BUS DISTRIBUTED INTERCROSS DEVICE**
VERTEILTE INTERCROSS-EINRICHTUNG MIT EINEM GEMEINSAMEN BUSS
DISPOSITIF D'INTERCONNEXION DISTRIBUÉE À BUS PARTAGÉ

(30) Priority: 19.09.2007 CN 200710152232
(43) Date of publication of application: 16.06.2010
(73) Proprietor: ZTE Corporation, Shenzhen, Guangdong 518057 (CN)
(72) Inventor: XIA, Liang, Shenzhen Guangdong 518057 (CN); HUANG, Jianhui, Shenzhen Guangdong 518057 (CN); YUAN, Yan, Shenzhen Guangdong 518057 (CN)
(74) Representative: Pallini, Diego
(86) International application number: PCT/CN2007/003314
(87) International publication number: WO 2009/036618

(56) References cited:
- CN-A- 1 471 242
- CN-A- 1 691 568
- CN-A- 101 035 055
- US-A1- 2007 065 152

## Description

### Technical Field

The present invention relates to a distributed space division cross device with a shared bus, and in particular, to a technique of cross scheduling of services in the field of optical transmission.

### Background of the Invention

At present, the types and quantities of client services accessed through a transmission apparatus are greatly increased, and meanwhile the complexity of transmission networking is also raised, which requires the transmission apparatus to flexibly support connection and disconnection of client services and have flexible scheduling ability and perfect protection function. A cross device is generally needed to achieve these functions, and such a cross device is used to provide cross scheduling of services and protection switching functions. A transmission apparatus with a cross unit generally adopts a centralized cross matrix, and a service signal of each service access single board and line single board is connected to a centralized cross unit via a sub-rack backboard bus after being processed. There will be various types of and a plurality of service access boards and line single boards which are inserted in service slots on the sub-rack, and the cross unit is inserted in a fixed cross board slot. All the service scheduling is implemented by the cross matrix of the cross unit. For the purpose of reliability, a cross unity is generally required to make a 1+1 warm backup by itself, and when one cross unit has a fault, the service can automatically switch to another cross unit.

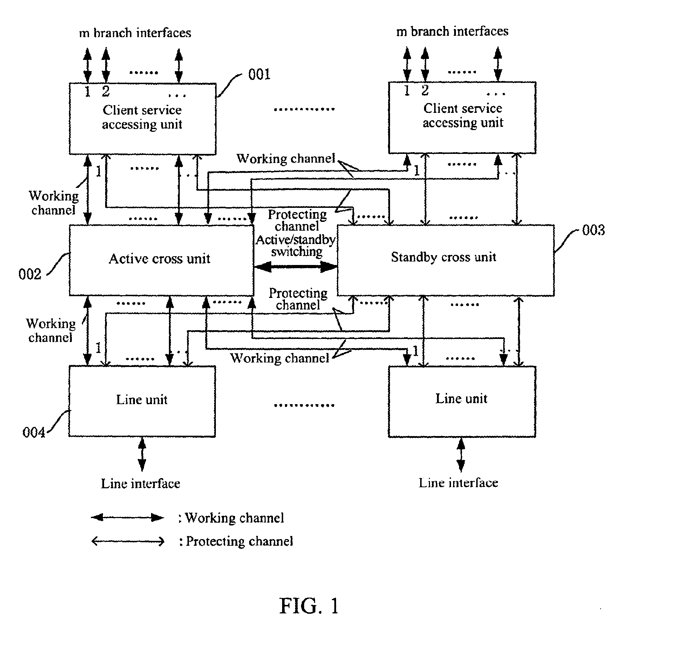

As shown in FIG. 1, it is a block diagram of the architecture of a transmission apparatus in traditional centralized cross mode. A sub-rack is generally provided with two cross units 002 and 003, one serves as an active cross unit 002, and the other serves as a standby cross unit 003, and the two boards are exactly the same. The number of the client service access units 001 is configured according to the number of the client service signals and may be plural, and the number of line units 004 may also be plural. There are a plurality of high-speed data channels between any client service access unit 001 and the active/standby cross units respectively, and these high-speed channels are implemented with high-speed backboards. The channels connected with the active cross unit 002 are called as working channels, and the ones connected with the standby cross unit are called as protecting channels. The client service access unit 001 can switch between working channels and protecting channels if required. There is an active/standby switching control logic between the two cross units for achieving active/standby switching control between the two cross units. There are also a plurality of high-speed data channels between any line unit 004 and the active/standby cross units respectively and these high-speed channels are implemented with high-speed backboards. The channels connected with the active cross unit 002 are called as working channels, and the ones connected with the standby cross unit 003 are called as protecting channels. The line unit 004 can switch between working channels and protecting channels if required. The client service access unit 001 and the line unit 004 are connected with the cross units 002 and 003 via a high-speed backboard, and the cross units 002 and 003 can flexibly cross and schedule these high-speed connections.

It can be obviously seen from the above features of the structure of the centralized cross architecture that it has the following drawbacks:

Since a cross unit adopts a means of 1+1 backup, two slots are needed, and moreover the positions of the slots are required to be fixed, thus reducing the number of the precious slots in the server single board and also reducing flexibility of positions. Especially in a compact transmission apparatus, the number of slots in the device is very limited due to the size restriction of its structure, and if centralized cross is adopted, two positions for mounting service single boards are occupied, and thus the number of accessed services is deceased.

Each service single board has to be connected with active and standby cross units via a backboard signal. The number of the signals is large, and the backboard is complicated.

The cross matrix of the cross unit has to be configured according to the maximum cross scale of the local sub-rack, therefore, the scale of the cross matrix is quite large and the cost is very high.

In a word, the structure of the centralized cross architecture is not suitable for such transmission apparatuses as a compact transmission apparatus, a cost-sensitive transmission apparatus requiring accessing as many services as possible while not having strict requirements for cross scale or service scheduling ability.

US 2007/0066162 A1 discloses a transponder unit which can be realized in the form of a printed circuit board, it relays signals between a plurality of channels of an optical transport network and a plurality of clients. The interconnections within the transponder unit are reconfigurable for selective connections. A connection between a first client and a first network channel and a connection between a second client and a second network channel is independent of each other and may be selected so that the second client is connected to the first network channel and the first client is connected to the second network channel.

### Summary of the Invention

The technical problem to be solved in the present invention is to provide a distributed cross device with a shared bus so as to overcome the drawback of the existing centralized cross that cannot satisfy the requirements of a compact transmission apparatus. The present invention resolves the problem that the cross unit of a centralized cross system occupies precious slots for accessing services, reduces the number of the backboards, simplifies the design of the backboard and meanwhile reduces the cost of the device.

In order to achieve the above purpose, the present invention provides a distributed cross device comprising a shared bus and a plurality of service single boards, wherein each service single board includes: a space division cross matrix module, a client service processing module and a line service processing module, and each service single board is connected with another one via the space division cross matrix module and the external cross shared bus, and; wherein,
the space division cross matrix module is adapted to receive signals output by the client service processing module and the line service processing module and to implement cross scheduling of service signals of the service single board where the space division cross matrix module is located;
the client service processing module is adapted to connect client optical signals and perform optical/electrical and electrical/optical conversions and data clock processing, as well as to detect service performances of different service single boards and produce signals for the space division cross matrix module;
the line service processing module is adapted to implement framing and deframing of line signals and optical/electrical and electrical/optical conversions, and meanwhile detect line signals of different service single boards and produce signals for the space division cross matrix module;
the shared bus is adapted to connect the space division cross matrix modules of all the service single boards, wherein service signals of each service single board are scheduled to the shared bus through the space division cross matrix module thereof and then transmitted to a space division cross matrix module of another service single board.

The device of the present invention, wherein each service single board further comprises:
an assembly/disassembly module connecting the line service processing module with the space division cross matrix module for implementing assembly and disassembly between services signals and line signals of a plurality of clients, wherein when the assembly/disassembly module does not perform assembly/disassembly operations, the line signals correspond to the service signals.

The device of the present invention, wherein the space division cross matrix module on each service single board comprises an upper interface and a lower interface connected to an upper section of the shared bus and a lower section of the shared bus respectively, and each service single board is head-to-tail connected with another one in series to form the shared bus.

The device of the present invention, wherein the shared bus is a closed-loop ring bus or an open chain bus.

Wherein the bandwidth of the upper and lower interfaces of the shared bus is 4×1.25G or 4×2.5G.

The device of the present invention, wherein the client service processing module is a SFP optical module;
the space division cross matrix module is a 12×12 space division cross chip;
the line service processing module is a line service processing module by means of an optical transport network.

Wherein the assembly/disassembly module is further an assembly/disassembly module for implementing data encapsulation and assembly/disassembly of client service signals to line signals by means of Generic Framing Procedure.

Wherein there are at least two client service processing modules in each service single board and, there is at least one line service processing module in each service single board.

Compared with the prior art, the device of the present invention, due to adoption of a new shared bus and distributed space division cross technique, reduces requirements on the capacity of a space division cross chip, decreases the number of backboard buses, simplifies the design of a backboard bus, increases the number of service single boards and the number of accessed services in the system, reduces the cost of the system, simplifies the structure of the device and complexity, and saves time for development.

### Brief Description of the Drawings

FIG. 1 is an illustration for the framework of a conventional centralized cross transmission apparatus described in the examples of the present invention;
FIG. 2 is an illustration for the topological structure of the networking for a distributed cross device described in an embodiment of the present invention;
FIG. 3 is a block diagram for the principle of a distributed cross device described in an embodiment of the present invention;
FIG. 4 is a block diagram for the principle of a distributed cross scheduling device of GbE service described in the examples of the present invention;
FIG. 5 is a block diagram for the principle of a distributed cross scheduling device of SDH service described in an embodiment of the present invention.

### Preferred Embodiments of the Invention

The present invention provides a distributed cross device with a shared bus. The present invention rather applies to transmission apparatuses with a limited size and a low cost that are not required to provide high capability of service scheduling but have large amount of accessed services. The specific embodiments will be described in detail in the following part without any intention to confine the present invention.

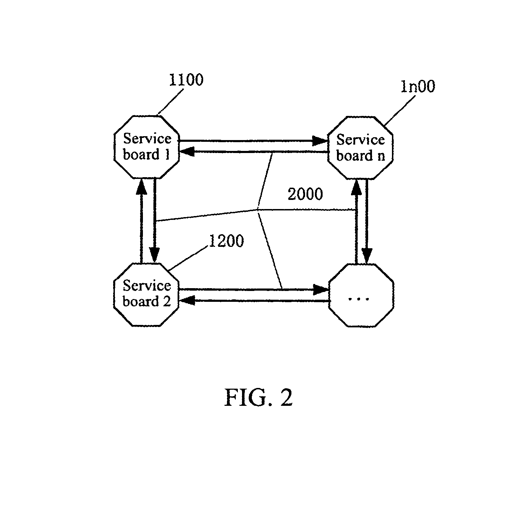

FIG. 2 is an illustration for the topological structure of the networking for the transmission apparatus with the device provided by the present invention. A plurality of service single boards are connected with each other via their internal distributed cross modules and an external cross bus, each service single board shares the bandwidth of the cross bus, and service scheduling is performed between service single boards through the distributed cross modules and the cross bus.

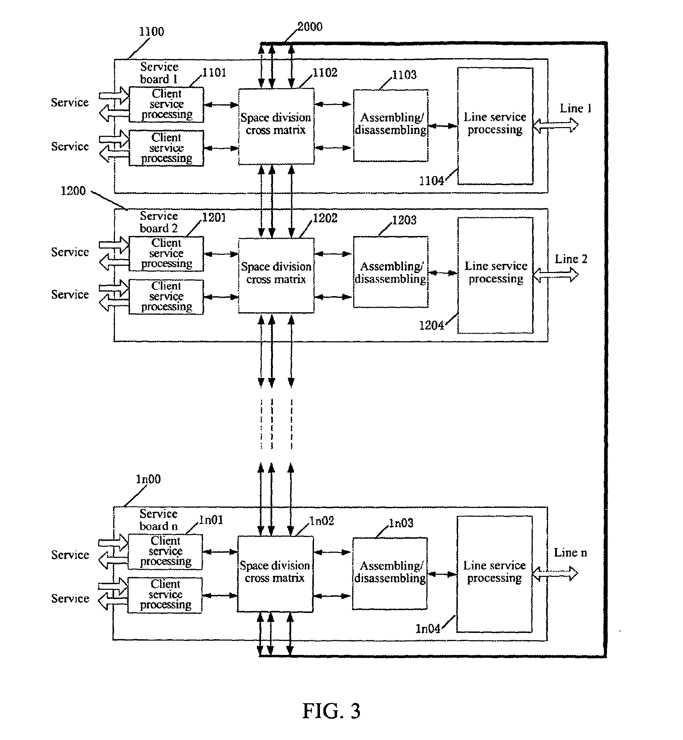

FIG. 3 is a detailed block diagram for the principle of the present invention as shown in FIG. 2. Structures of the service single boards are the same, and thus only the composition of one service single board is described as follows:
a client service processing module 1101 used for connecting client optical signals and performing optical/electrical and electrical/optical conversions and processing data clock, as well as detecting service performances. When a service single board has a plurality of client services to access, a plurality of client service processing modules 1101 are needed;
a space division cross matrix module 1102 used for implementing cross scheduling of service signals, whose cross scale should be determined as required in practice;
an assembly/disassembly module 1103 used for implementing assembly and disassembly functions from a plurality of client service signals to line signals, wherein this modules is not necessary, and when assembly and disassembly of client services are not performed, there will be a plurality of line signals that one-to-one correspond to the number of the client services;
a line service processing module 1104 used for implementing framing and deframing of line signals and optical/electrical and electrical/optical conversions, and meanwhile performing detection on line signals;
a shared bus 2000 used for connecting cross matrixes of service single boards, wherein the services on each service single board can be scheduled to the shared bus through a cross matrix and transmitted to a cross matrix of another service single board, the cross matrix on each service single board has an upper interface and a lower interface that are connected to an upper section of shared bus and a lower section of shared bus respectively, and each service single board is head-to-tail connected with another one in series to form a shared bus (2000). Upon requirements, (2000) can be a closed-loop ring bus or an open chain bus. The number of signal lines of the shared bus and the maximum speed of each signal line can be various as required.

The relationship between each component of the device:

The client service processing module 1101 is accessed to perform optical/electrical and electrical/optical conversions and data clock processing, as well as to detect service performances, and then the client service processing module 1101 sends signals to the space division cross matrix module 1102. Line signals pass through the line service processing module 1104 where framing and deframing of line signals and optical/electrical and electrical/optical conversions are performed, and meanwhile detection on the line signals is also performed. Then the line signals are sent to 1103 for assembly and disassembly processing, and the signals after the assembly and disassembly processing are connected with the space division cross matrix module 11024 again. Meanwhile, the space division cross matrix module 1102 is connected to the shared bus 2000 through its upper bus interface and lower bus interface respectively, and then connected to service single boards 1200 and 1n00 through the shared bus 2000.

Any one of the client service signals of a service single board can be scheduled to lines of other service single boards through a space division cross matrix module, and meanwhile the signals deassembled from line signals of a service single board can also be scheduled to client service of any other service single board for output. Wherein there can be more than one service single boards on the bus, the size of the space division cross matrix module is determined according to requirements for practical service scheduling. The bandwidth of the bus means the product of the number of the bus signals and the speed of a single signal, wherein the number and speed are also determined according to service speed and scheduling ability. In the absence of assembly and disassembly, a service single board may not have 1103 module, and in this case the number of line signals are correspond to the number of client services. The shared bus 2000 can be PCB wire routing on a backboard, or in other forms such as high-speed cable connection.

The implementation of the technical scheme of the present invention will be described in further detail in conjunction with the drawings basically according to the sequence of the drawings:

Example one: a distributed cross scheduling device for GbE service:

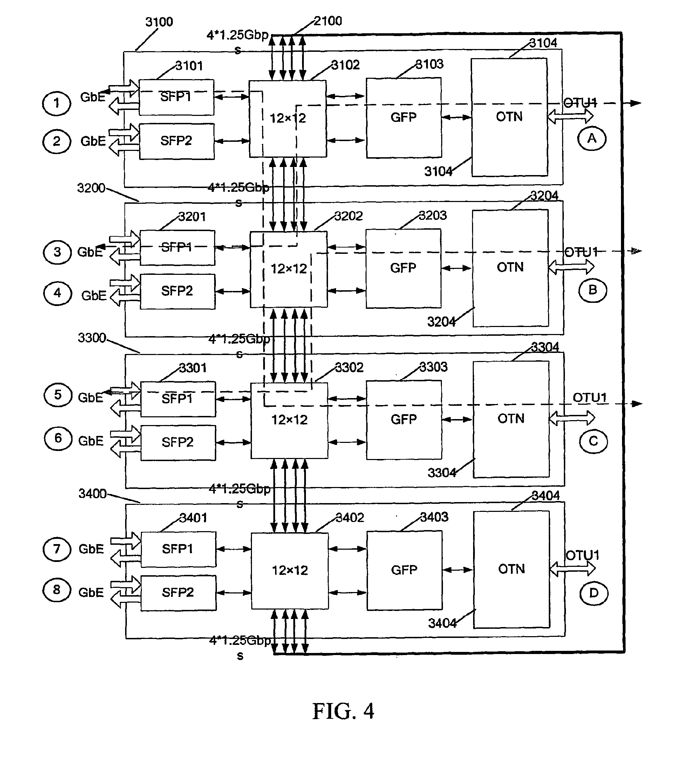

As shown in FIG. 4, the embodiment of a distributed cross scheduling device for GbE service is introduced, and the specific device will be described in the following:

In the present embodiment, the device is composed of four service single boards having the same structure, and each service single board has two GbE client interfaces. The client service processing module 3101 adopts a SFP (Small Form-factor Pluggable) optical module to connect client signals, and the space division cross matrix module 3102 adopting a 12×12 space division cross chip connects with 3101, 3103 and 2100 respectively. The speed of each cross signal is 1.25G, the bandwidths of the upper and lower interfaces of the shared bus are 4×1.25G respectively, and the bus is a closed ring bus. The assembly/disassembly module 3103 adopts the means of GFP (Generic Framing Procedure) to implement functions of data encapsulation and assembly/disassembly from client service signals to line signals. The line service processing module 3104 adopts the means of OTN (Optical Transport Network) to implement framing and deframing of line signals. The line interface signal is indicated as OTU1.

In FIG. 4, an example of a means for performing service scheduling is shown with dashed line: a client service 1 accessed through 3101 is crossed to a lower port of the 2100 bus by a space division cross matrix module 3102 and is connected to 3202. After the cross, 3202 continues to send the service 1 down to 2100 and connects it to 3302, and after being crossed again, the service 1 is sent to 3303. The service 1 is sent to 3304 after being assembled with a service 6 and then is sent to line C. The inverse disassembly process is contrary to the above process.

Similarly, a service 3 is crossed to an upper port of 2100 by 3202 and is connected to 3102, and after being crossed again it is sent to 3103 where it is assembled with a service 2 and is sent to 3104, and then is sent to line A. The inverse disassembly process is contrary to the above process.

A service 5 is crossed to an upper port of 2100 by 3302 and is connected to 3202, and after being crossed again it is sent to 3203 where it is assembled with a service 4 and is sent to 3204, and then is sent to line B. The inverse disassembly process is contrary to the above process.

Services 7 and 8 arrive at a channel 3403 directly after passing through the space division cross matrix module 3402, and is sent to 3404 after being assembled and then to line D. The inverse disassembly process is contrary to the above process.

Example two: a distributed cross scheduling device of SDH service:

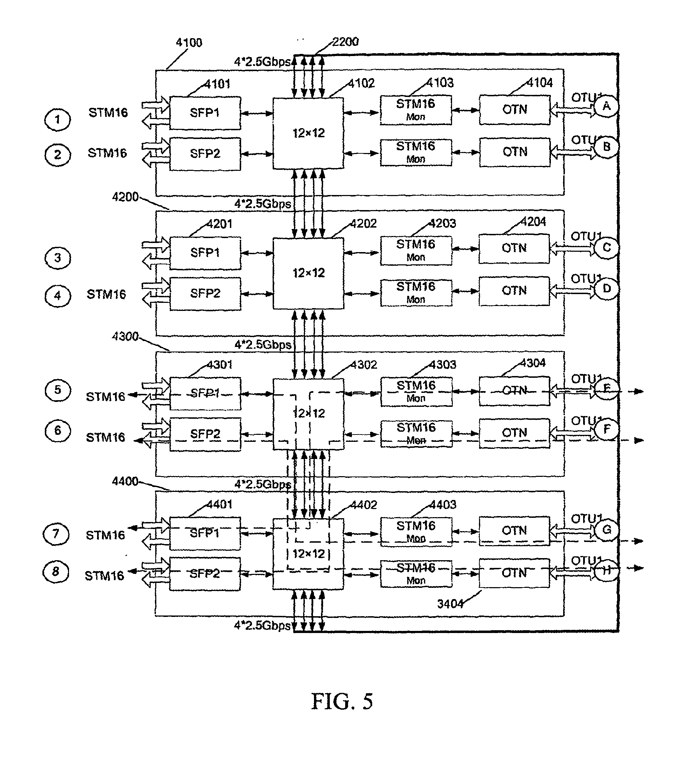

As shown in FIG. 5, an embodiment of a distributed cross scheduling device for SDH service is introduced, and the specific device is described in the following.

In the present embodiment, the device is composed of four service single boards having the same structure, and each service single board has two STM16 client interfaces. The client service processing module 4101 adopts a SFP optical module to connect client signals, and the space division cross matrix module 4102 adopting a 12×12 space division cross chip connects with 4101, 4103 and 2200 respectively. The speed of each cross signal is 2.5G, the bandwidths of the upper and lower interfaces of the shared bus are 4×2.5G respectively, and the bus is a closed ring bus. This distributed cross device has no assembly/disassembly part, instead, it has a STM16 service monitoring part 4103 used for sending signals to a line service processing module 4104 after implementing performance detection. 4104 adopts the means of OTN (Optical Transport Network) to implement framing and deframing of line signals. The line interface signal is indicated as OTU1. Each service single board has two line interfaces.

In FIG. 5, an example of a means for performing service scheduling is shown with dashed line: a client service 1 accessed through 4101 is broadcast by a space division cross matrix module 4102 into two paths that are sent to 4103 and an lower port of 2200 bus respectively and then to 4104 and line A after performance detection is implemented at 4103. Another path of signals are crossed to 4202 and then are sent to 4203 after being crossed again. 4203 sends them to 4204 and then to line C. The inverse disassembly process is contrary to the above process, but signals from line C and line A have to be selectively received at 4102 and a path of signals with good quality will be chosen to be sent to 4101 and then to client interface 1.

Similarly, cross scheduling of client services 5, 6, 7 and 8 is the same with the above method, i.e., they are scheduled to lines G, H, E and F respectively. Client services 2 and 4 are not scheduled and are sent to corresponding line interfaces B and D after transmitted directly. Client interface 3 cannot access client services since it is occupied by signals of client service 1.

### Industrial Applicability

Compared with the prior art, the distributed cross device with a shared bus described in the present invention, due to adoption of a new shared bus and distributed space division cross technique, reduces requirements on the capacity of a space division cross chip, decreases the number of backboard buses, simplifies the design of a backboard bus, increases the number of service single boards and the number of accessed services in the system, reduces the cost of the system, simplifies the structure of the device and complexity, and saves time for development.

## Claims

1. A distributed cross device, comprising a shared bus (2000) and, **characterized by** a plurality of service single boards (1100, 1200, ...,1n00), wherein each service single board (1100) includes: a space division cross matrix module (1102), a client service processing module (1101) and a line service processing module (1104), and each service single board (1100) is connected with another one via the space division cross matrix module (1102) thereof and the cross shared bus (2000); wherein,
the space division cross matrix module (1102) is adapted to receive signals output by the client service processing module (1101) and the line service processing module (1104) and to implement cross scheduling of service signals of the service single board (1100) where the space division cross matrix module (1102) is located;
the client service processing module (1101) is adapted to connect client optical signals and perform optical/electrical and electrical/optical conversions and data clock processing,
as well as to detect service performances of different service single boards (1100) and produce signals for the space division cross matrix module (1102);
the line service processing module (1104) is adapted to implement framing and deframing of line signals and optical/electrical and electrical/optical conversions, and meanwhile to detect line signals of different service single boards (1100) and produce signals for the space division cross matrix module (1102);
the shared bus (2000) is adapted to connect the space division cross matrix modules (1102) of all the service single boards (1100), wherein service signals of each service single board (1100) are scheduled to the shared bus (2000) through the space division cross matrix module(1102) thereof and then transmitted to a space division cross matrix module (1102) of another service single board (1100).

2. The device of claim 1, wherein each service single board (1100) further comprises:
an assembly/disassembly module (1103) connecting the line service processing module (1104) with the space division cross matrix module (1102) for implementing assembly and disassembly between services signals and line signals of a plurality of clients, wherein when the assembly/disassembly module (1103) does not perform assembly/disassembly operations, the line signals correspond to the service signals.

3. The device of claim 1, wherein the space division cross matrix module (1102) on each service single board (1100) comprises an upper interface and a lower interface connected to an upper section of the shared bus (2000) and a lower section of the shared bus (2000) respectively, and each service single board (1100) is head-to-tail connected with another one in series to form the shared bus (2000).

4. The device of claim 1, wherein the shared bus (2000) is a closed-loop ring bus or an open chain bus.

5. The device of claim 3, wherein a bandwidth of the upper and lower interfaces of the shared bus (2000) is 4×1.25G or 4×2.5G.

6. The device of claim 1, wherein the client service processing module is a SFP optical module;
the space division cross matrix module (1102) is a 12×12 space division cross chip; the line service processing module (1104) is a line service processing module by means of an optical transport network.

7. The device of claim 2, wherein the assembly/disassembly module (1103) is further an assembly/disassembly module for implementing data encapsulation and assembly/disassembly from client service signals to line signals by means of Generic Framing Procedure.

8. The device of claim 2, wherein there are at least two client service processing modules (1101) in each service single board (1100) and there is at least one line service processing module (1104) in each service single board (1100).

## Patentansprüche

1. Verteilte Kreuzungseinrichtung, die einen gemeinsam genutzten Bus (2000) umfasst und **gekennzeichnet ist durch** mehrere Diensteinzelplatinen (1100, 1200, ... 1n00), wobei jede Diensteinzelplatine (1100) umfasst: ein Raumaufteilungs-Kreuzungsmatrixmodul (1102), ein Kundendienstverarbeitungsmodul (1101) und ein Leitungsdienstverarbeitungsmodul (1104), und wobei jede Diensteinzelplatine (1100) mit einer anderen über das Raumaufteilungs-Kreuzungsmatrixmodul (1102) derselben und den gemeinsam genutzten Kreuzungsbus (2000) verbunden ist; wobei
das Raumaufteilungs-Kreuzungsmatrixmodul (1102) angepasst ist, um Signale zu empfangen, die von dem Kundendienstverarbeitungsmodul (1101) und dem Leitungsdienstverarbeitungsmodul (1104) ausgegeben werden, und um eine Kreuzungsplanung von Dienstsignalen der Diensteinzelplatine (1100), auf der sich das Raumaufteilungs-Kreuzungsmatrixmodul (1102) befindet, zu implementieren;
das Kundendienstverarbeitungsmodul (1101) angepasst ist, um optische Signale von Kunden anzuschließen und optische/elektrische Umwandlungen und elektrische/optische Umwandlungen und eine Datentaktverarbeitung durchzuführen sowie um Dienstleistungen anderer Diensteinzelplatinen (1100) zu detektieren und um Signale für das Raumaufteilungs-Kreuzungsmatrixmodul (1102) zu erzeugen;
das Leitungsdienstverarbeitungsmodul (1104) angepasst ist, um ein Verpacken und Entpacken von Leitungssignalen und optische/elektrische und elektrische/optische Umwandlungen zu implementieren, und um in der Zwischenzeit Leitungssignale von anderen Diensteinzelplatinen (1100) zu detektieren und um Signale für das Raumaufteilungs-Kreuzungsmatrixmodul (1102) zu erzeugen;
der gemeinsam genutzte Bus (2000) angepasst ist, um die Raumaufteilungs-Kreuzungsmatrixmodule (1102) von allen Diensteinzelplatinen (1100) zu verbinden, wobei Dienstsignale von jeder Diensteinzelplatine (1100) für den gemeinsam genutzten Bus (2000) **durch** das Raumaufteilungs-Kreuzungsmatrixmodul (1102) derselben geplant werden und dann an ein Raumaufteilungs-Kreuzungsmatrixmodul (1102) einer anderen Diensteinzelplatine (1100) übertragen werden.

2. Einrichtung nach Anspruch 1,
wobei jede Diensteinzelplatine (1100) ferner umfasst:
ein Zusammensetzungs/Zerlegungsmodul (1103), welches das Leitungsdienstverarbeitungsmodul (1104) mit dem Raumaufteilungs-Kreuzungsmatrixmodul (1102) verbindet, um eine Zusammensetzung und Zerlegung zwischen Dienstsignalen und Leitungssignalen von mehreren Kunden zu implementieren, wobei dann, wenn das Zusammensetzungs/Zerlegungsmodul (1103) keine Zusammensetzungs/Zerlegungs-Operationen durchführt, die Leitungssignale den Dienstsignalen entsprechen.

3. Einrichtung nach Anspruch 1,
wobei das Raumaufteilungs-Kreuzungsmatrixmodul (1102) auf jeder Diensteinzelplatine (1100) eine obere Schnittstelle und eine untere Schnittstelle umfasst, die mit einem oberen Abschnitt des gemeinsam genutzten Busses (2000) bzw. einem unteren Abschnitt des gemeinsam genutzten Busses (2000) verbunden sind; und wobei jede Diensteinzelplatine (1100) mit einer anderen in Reihe nacheinander verbunden ist, um den gemeinsam genutzten Bus (2000) zu bilden.

4. Einrichtung nach Anspruch 1,
wobei der gemeinsam genutzte Bus (2000) ein Bus mit einem geschlossenen Kreis oder ein Bus mit einer offenen Kette ist.

5. Einrichtung nach Anspruch 3,
wobei eine Bandbreite der oberen und unteren Schnittstellen des gemeinsam genutzten Busses (2000) 4 x 1,25 G oder 4 x 2,5 G beträgt.

6. Einrichtung nach Anspruch 1,
wobei
das Kundendienstverarbeitungsmodul ein optisches SFP-Modul ist;
das Raumaufteilungs-Kreuzungsmatrixmodul (1102) ein 12 x 12 Raumaufteilungskreuzungschip ist;
das Leitungsdienstverarbeitungsmodul (1104) ein Leitungsdienstverarbeitungsmodul mit Hilfe eines optischen Transportnetzes ist.

7. Einrichtung nach Anspruch 2,
wobei das Zusammensetzungs/Zerlegungsmodul (1103) ferner ein Zusammensetzungs/Zerlegungsmodul zum Implementieren einer Datenkapselung und einer Zusammensetzung/Zerlegung von Kundendienstsignalen in Leitungssignale mit Hilfe einer Generic Framing Procedure ist.

8. Einrichtung nach Anspruch 2,
wobei es mindestens eine zwei Kundendienstverarbeitungsmodule (1101) auf jeder Diensteinzelplatine (1100) gibt und es mindestens ein Leitungsdienstverarbeitungsmodul (1104) auf jeder Diensteinzelplatine (1100) gibt.

## Revendications

1. Dispositif d'interconnexion distribuée comprenant un bus partagé (2000) et **caractérisé par** une pluralité de plaquettes uniques de service (1100, 1200, ..., 1n00), où chaque plaquette unique de service (1100) comprend : un module de matrice croisée de division de l'espace (1102), un module de traitement de service client (1101) et un module de traitement de service de ligne (1104), et chaque plaquette unique de service (1100) est connectée à une autre via le module de matrice croisée de division de l'espace (1102) de cette dernière et le bus commun croisé (2000) ; dans lequel,
le module de matrice croisée de division de l'espace (1102) est adapté pour recevoir des signaux émis en sortie par le module de traitement de service client (1101) et le module de traitement de service de ligne (1104) et pour implémenter un ordonnancement croisé de signaux de service de la plaquette unique de service (1100) où le module de matrice croisée de division de l'espace (1102) est situé ;
le module de traitement de service client (1101) est adapté pour connecter des signaux optiques de client et réaliser des conversions optique/électrique et électrique/optique et un traitement d'horloge de données, ainsi que pour détecter des performances de service de différentes plaquettes uniques de service (1100) et produire des signaux pour le module de matrice croisée de division de l'espace (1102) ;
le module de traitement de service de ligne (1104) est adapté pour implémenter le verrouillage et le déverrouillage de trame de signaux de ligne et des conversions optique/électrique et électrique/optique, et pendant ce temps pour détecter des signaux de ligne de différentes plaquettes uniques de service (1100) et produire des signaux pour le module de matrice croisée de division de l'espace (1102) ;
le bus partagé (2000) est adapté pour connecter les modules de matrice croisée de division de l'espace (1102) de toutes les plaquettes uniques de service (1100), où des signaux de service de chaque plaquette unique de service (1100) sont ordonnancés au bus partagé (2000) via le module de matrice croisée de division de l'espace (1102) de ce dernier puis transmis à un module de matrice croisée de division de l'espace (1102) d'une autre plaquette unique de service (1100).

2. Dispositif selon la revendication 1, dans lequel chaque plaquette unique de service (1100) comprend en outre :
un module d'assemblage/désassemblage (1103) connectant le module de traitement de service de ligne (1104) au module de matrice croisée de division de l'espace (1102) pour implémenter un assemblage et un désassemblage entre des signaux de service et des signaux de ligne d'une pluralité de clients, où le module d'assemblage/désassemblage (1103) ne réalise pas d'opérations d'assemblage/désassemblage, les signaux de ligne correspondent aux signaux de service.

3. Dispositif selon la revendication 1, dans lequel le module de matrice croisée de division de l'espace (1102) sur chaque plaquette unique de service (1100) comprend une interface supérieure et une interface inférieure connectée à la section supérieure du bus partagé (2000) et une section inférieure du bus partagé (2000) respectivement, et chaque plaquette unique de service (1100) est connectée en tête-à-queue avec une autre en série pour former le bus partagé (2000).

4. Dispositif selon la revendication 1, dans lequel le bus partagé (2000) est un bus à boucle fermée ou un bus à chaîne ouverte.

5. Dispositif selon la revendication 3, dans lequel une largeur de bande des interfaces supérieure et inférieure du bus partagé (2000) est de 4 x 1,25 G ou 4 x 2,5 G.

6. Dispositif selon la revendication 1, dans lequel le module de traitement de service client est un module optique SFP ;
le module de matrice croisée de division de l'espace (1102) est une puce croisée de division de l'espace 12 x 12 ;
le module de traitement de service de ligne (1104) est un module de traitement de service de ligne au moyen d'un réseau de transport optique.

7. Dispositif selon la revendication 2, dans lequel le module d'assemblage/désassemblage (1103) est en outre un module d'assemblage/désassemblage pour implémenter une encapsulation et un assemblage/désassemblage de données de signaux de service client à des signaux de ligne au moyen d'une procédure de verrouillage de trame générique.

8. Dispositif selon la revendication 2, dans lequel il y a au moins deux modules de traitement de service client (1101) dans chaque plaquette unique de service (1100) et il y a au moins un module de traitement de service de ligne (1104) dans chaque plaquette unique de service (1100).
